# EUROPEAN PATENT SPECIFICATION

(11) **EP 1 639 782 B1**
(45) Date of publication and mention of the grant of the patent: **27.02.2008**
(21) Application number: 04741888.4
(22) Date of filing: 24.06.2004
(51) Int. Cl.: H04L 29/06

(54) **METHOD FOR DISTRIBUTING PASSWORDS**
VERFAHREN ZUM VERTEILEN VON PASSWÖRTERN
PROCEDE DE DISTRIBUTION DE MOTS DE PASSE

(30) Priority: 27.06.2003 GB 0314971
(43) Date of publication of application: 29.03.2006
(73) Proprietor: TELEFONAKTIEBOLAGET LM ERICSSON (publ), 164 83 Stockholm (SE)
(72) Inventor: TORVINEN, Vesa Matti, FIN-20520 Turku (FI); WIFVESSON, Monica, S-22652 Lund (SE); GONZALEZ-PLAZA, Alfredo, E-28820 Madrid (ES)
(74) Representative: Norin, Klas
(86) International application number: PCT/EP2004/051233
(87) International publication number: WO 2005/002166

(56) References cited:
- NIEMI A ET AL: "HTTP Digest Authentication Using AKA, NETWORK WORKING GROUP INTERNET-DRAFT, draft-ietf-sip-digest-aka-01" NETWORK WORKING GROUP INTERNET DRAFT, XX, XX, 25 April 2002 (2002-04-25), pages 1-18, XP002225942
- FRANKS J ET AL: "An Extension to HTTP : Digest Access Authentication" RFC 2069, January 1997 (1997-01), XP002221959

## Description

### Field of the Invention

The invention relates to a method for distributing passwords. In particular, although not exclusively, the invention relates to a method for generating a password for use by an end-user device to access a remote server, where the password is retained for subsequent use.

### Background to the Invention

The creation and distribution of end-user passwords for applications and application proxies is problematic. On the one hand, end-users tend to create passwords that are simple and short and which therefore run the risk of being uncovered by unauthorised parties. On the other hand, finding out the relationship between the end-user identities and their passwords is often insecure and costly.

There are mechanisms in existence which allow the re-use of pre-existing passwords between different trust domains, such as Single-Sign-On solutions developed by Liberty Alliance. However, it is often necessary to rely on a third party to perform the authentication. When such an arrangement is employed, the service provider does not actively take part in the authentication. On the other hand, the password management performed by the service provider is not always appropriate because the handling of passwords in application servers requires complex and costly management procedures, *e.g.* maintenance of the password lifetimes, overlapping password values, policies regarding valid values, and so on. In addition, end-users do not want to remember many passwords, and they tend to use the same passwords with several application servers, which clearly decreases the level of security.

The Hypertext Transfer Protocol (HTTP) Digest authentication framework, as described in the IETF document RFC 2617, may include methods capable of generating end-user passwords. For example, HTTP Digest Authentication using Authentication and Key Agreement (AKA), as described in RFC 3310, is a method for creating end-user passwords using existing third generation (3GPP) authentication infrastructure based on AKA credentials stored on a tamper-resistant device, the so-called ISIM/USIM/SIM card. Details of the above frameworks can be found at http://www.ietf.org/rfc.html. Even though HTTP Digest AKA provides a flexible way to generate fresh passwords without user involvement, it does not include a standard way to delegate these passwords to third parties, such as application servers or proxies. Furthermore, HTTP Digest AKA assumes that the passwords can only be used once.

### Statement of the Invention

It is an object of the invention to overcome or at least mitigate the above problems. In particular, it is an object of the present invention to delegate the passwords generated using HTTP Digest AKA to third parties so that the passwords can be securely used for subsequent authentication.

These and other objects are achieved by the initial authentication being done between the end-user device and its home network using HTTP Digest with an algorithm capable of generating passwords, for example HTTP Digest AKA. During the initial authentication, the home network initiates a process in which the new password is linked to the identity of a third party, such as an application server or a proxy, and to a new temporary end-user identity for that third party. The end-user device and the third party can start using the new password and related identities using HTTP Digest as an authentication method.

In accordance with one aspect of the present invention there is provided a method of generating a password for use by an end-user device (UE) to access a remote server, comprising:
sending a request for access from the UE to the remote server;
creating a temporary identity for the UE;
sending to an authentication node in the UE's home network details of the request for access;
at the authentication node or the remote server, generating a Hypertext Transfer Protocol (HTTP) Digest challenge using an algorithm capable of generating end-user passwords, including details of the temporary identity of the UE;
at the UE, generating a password based on the HTTP Digest challenge, said password being associated with the identity of the remote server and the identity of the UE; and
storing the password and the temporary identity of the UE at the UE.

The algorithm for generating end-user passwords is preferably HTTP Digest Authentication and Key Agreement (AKA), although it will be appreciated that other algorithms may be used.

Preferably the identity of the remote server is sent to the authentication node, enabling the generation of the HTTP Digest challenge to include the identity of the remote server. The identity of the remote server is preferably also stored at the UE.

The temporary identity of the UE is preferably created at the remote server.

In one embodiment, the step of sending details of the request for access to the authentication node may include redirecting the request for access to the authentication node. The HTTP Digest challenge may then be generated at the authentication node and sent from the authentication node directly to the UE. The password is preferably stored at the authentication node.

After the password has been generated the UE is preferably authenticated at the authentication node and the request for access redirected from the authentication node back to the remote server.

In an alternative embodiment, the step of sending details of the request for access to the authentication node may include the remote server contacting the authentication node directly. The HTTP Digest challenge may be generated at the authentication node and sent from the authentication node to the remote server. Alternatively, the remote server may generate the HTTP Digest challenge. The HTTP digest challenge is then sent directly from the remote server to the UE.

A HTTP Digest AKA challenge password may be included in the information sent from the authentication node to the remote server, enabling the UE to be authenticated at the remote server. Alternatively, the UE may be authenticated at the authentication node and an authentication result returned to the remote server.

The methods described above result in a password, associated with the identity of the UE and the remote server, being stored at the UE and the authentication node or remote server. This enables subsequent access from the UE to the remote server without the need to generate a further password. In accordance with a further aspect of the present invention there is provided a method of accessing a remote server from an end-user device, the method comprising:
generating and storing a password using a method as described above;
sending a request for access from the UE to the remote server;
at the remote server, generating a HTTP Digest challenge including details of the identity of the remote server and temporary identity of the UE and sending the challenge to the UE; and
at the UE, sending an authentication response including the temporary identity of the UE and a proof of possession of the password to the remote server.

If the password is not stored at the remote server, it may be necessary to send an authentication request from the remote server to the authentication node. The password may then be sent from the authentication node to the remote server, enabling authentication of the UE at the remote server. Alternatively, the UE may be authenticated at the authentication node and confirmation of authentication sent from the authentication node to the remote server.

### Brief Description of the Drawings

Figure 1 is a schematic illustration of a network.
Figure 2A illustrates a sequence for password generation and identity agreement between an end-user device (UE) and application server.
Figure 2B illustrates an alternative sequence for password generation and identity agreement between an end-user device (UE) and application server.
Figure 3 illustrates the sequence involved in the use of a new password

While the invention is susceptible to various modifications and alternative forms, specific embodiments thereof have been shown by way of example in the drawings and will herein be described in detail. It should be understood, however, that this specification is not intended to limit the invention to the particular forms disclosed herein, but on the contrary, the intention is to cover all modifications, equivalents, and alternatives falling within the scope of the invention, as defined by the appended claims.

### Detailed Description of the Preferred Embodiment

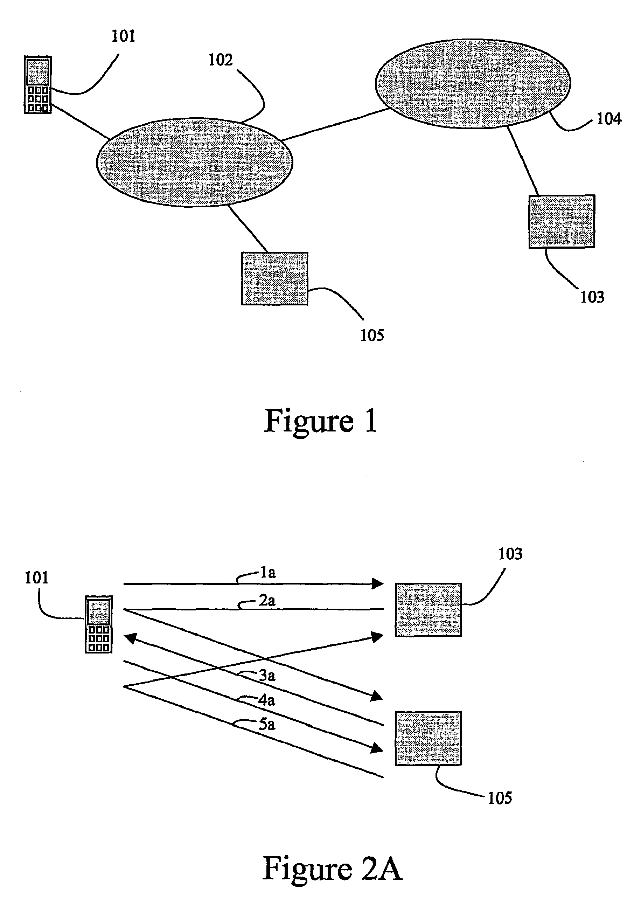

Figure 1 illustrates a typical arrangement in which an end-user device (UE) 101 connected to a home network 102, *e.g.* a Universal Mobile Telecommunications System (UMTS) network, wishes to access an application server 103 connected to a further network 104. The UE 101 incorporates a tamper-resistant device such as an IP Multimedia Services Identity Module (ISIM) on which information can be stored. According to the HTTP Digest Authentication and Key Agreement (AKA) framework a shared secret is established beforehand between the ISIM of the UE 1 and an authenticator 105 in the home network 102. The secret is stored in the ISIM of the UE 101.

The authenticator 105 produces an authentication vector, based on the shared secret and a sequence number. The authentication vector contains a random challenge, a network authentication token, an expected authentication result, a session key for integrity check, and a session key for encryption. The authentication vector is downloaded to the application server 103. The application server 103 creates an authentication request containing the random challenge and the network authenticator token, which is delivered to the UE 101.

Using the shared secret and the sequence number, the UE 101 verifies the network authentication token contained in the authentication request with the ISIM. If the verification is successful, the network has been authenticated. The UE 101 then produces an authentication response, using the shared secret and the random challenge, and delivers this to the application server 103. The application server 103 compares the authentication response received from the UE 101 with the expected response received from the authenticator 103. If the two match, the user has been successfully authenticated, and the session keys in the authentication vector can be used for protecting further communications between the UE 101 and the application server 103. However, the next time the UE 101 wishes to access the application server 103 the same procedure must be followed to authenticate the network and obtain session keys; there is no mechanism to store a password for future use by the UE 101.

Figure 2A shows one embodiment of a system for authenticating the UE 101 to the application server (AS) 103. In the first phase the UE 101 is authenticated using HTTP Digest AKA, and the created password is tied to the identities of the application server 103 and the UE 101. In order to understand the processes shown in Figure 2A it is necessary to define two concepts used in the HTTP Digest authentication framework.

A 'realm' is a string which indicates to the UE 101 which username and password to use. This string contains at least the name of the authentication centre 103 and might additionally indicate the collection of users who might have access. An example might be "registered users@home.com". In the context of 3GPP/AKA, the realm of the home network is typically stored in the SIM/USIM/ISIM card of the UE 101.

A 'username' is the user's name in the specified realm. This string is used by the application server 103 to find the correct password for the user. In the context of 3GPP/AKA, the username used with the home network is typically stored in SIM/USIM/ISIM card of the UE 101. In most cases, the username is the same as the so-called Private Identity (IMPI). A 3GPP username identifies the subscription, and for this reason the passwords are specific to the end-user device rather than to the real end-user. In a normal HTTP authentication framework, the username and password are typed in by the end-user, but in the context of 3GPP/AKA these fields are automatically filled by the UE 101.

As shown in Figure 2A, in the first phase the UE 101 and application server 103 do not have a shared secret. The UE 101 is initially authenticated using HTTP Digest AKA, and the created password is tied to the identities of the UE 101 and application server 103. The procedure has the following steps:
1a) The UE 1 sends a HTTP request (typically HTTP GET) to the application server 103.
2a) Since the application server 103 and UE 101 do not have a shared secret, the application server 103 redirects the request to the authenticator 105. Before redirecting the request, the application server 103 may define a new temporary username for the UE 101. The application server 103 includes this username and its own identity information in the request. The identity information is typically encoded into the URI parameter in some standard format, *e.g.* "username@realm".
3a) The authenticator 105 checks to see if the application server 103 is authorised to do HTTP re-direction and request a new HTTP Digest AKA password for the UE 101. If this is the case, then the authenticator 105 takes the identity information from the request, and encodes this information in a HTTP Digest AKA challenge, which is sent to the UE 101. In one embodiment the authenticator 105 puts the identity information in the so-called "server data" of HTTP Digest AKA nonce, as described in RFC 3310. By including the identity in the challenge, the authenticator 105 can be sure that the identity of the application server 103 or the temporary identity of the end-user cannot be changed by any party (such as an attacker) between the UE 101 and authenticator 103, because the challenge is returned back to the authenticator 105 in the next message.
4a) The UE 101 authenticates the network (as defined in the standard AKA protocol) and generates a new password based on the HTTP Digest AKA challenge. The UE 101 stores locally the identity of the application server 104 and the newly generated password, to be used later for mutual authentication with the application server 103. If the challenge included also a new temporary 'username' generated by the application server 103, this username is also stored with the password and the application server 103 identity. Both the application server and UE identities are encoded in the HTTP Digest AKA challenge, *e.g.* using the format "username@realm". The UE 101 sends the authentication response to the authenticator 103.
   The new 'username' is marked as a temporary username by the UE 101. This username and related HTTP Digest AKA password is removed when a new 'username' and password are generated for the same realm. If the challenge does not include a new temporary username, then the existing username can be re-used.
5a) The authenticator 105 authenticates the UE 101, and if successful, stores the new password and the identities of the UE 101 and the application server 103 to be used later. The request is redirected back to the application server 103.

If appropriate, the application server 103 may trust the initial authentication performed by the authenticator 105. If the authenticator 105 is not perceived to be secure, the application server 103 may also re-challenge the UE 101 now using the newly generated password. This time, HTTP Digest AKA is not used for authentication. Instead, HTTP Digest with some other algorithm is used, *e.g.* MD5 can be used, as described in RFC 2617.

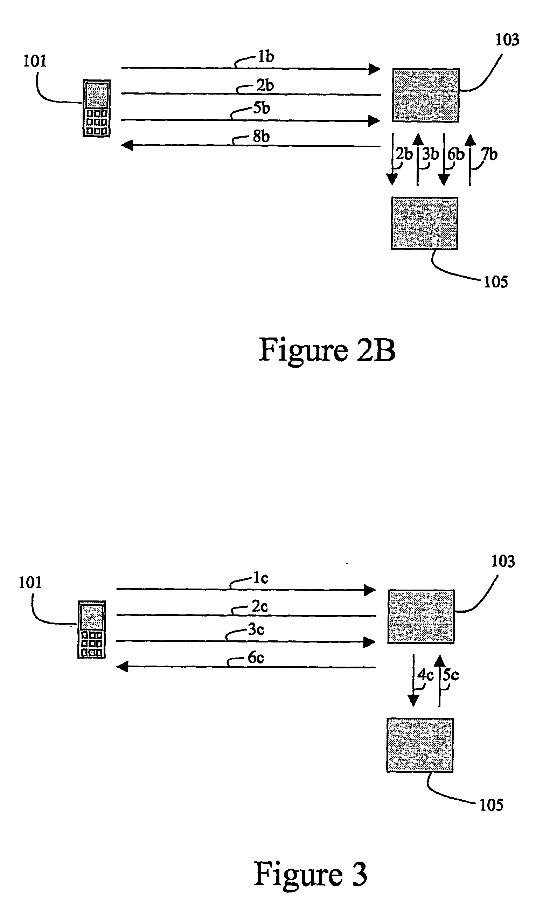

Figure 2B shows an alternative embodiment of a system for authenticating the UE 101 to the application server (AS) 103. The first phase is performed using a different procedure, having the following steps:
1b) The UE 1 sends a HTTP request (typically HTTP GET) to the application server 103.
2b) Since the application server 103 and UE 101 do not have a shared secret, the application server 103 requests a HTTP Digest AKA authentication challenge directly from the authenticator 105. As in the previously described embodiment, the request may include the identity of the application server 103 and a new temporary identity of the UE 101.
3b) The authenticator 105 checks to see if the application server 103 is authorised to request a new HTTP Digest AKA password for this UE 101. If this is the case, then the authenticator takes the identity of the application server and the temporary identity of the end-user (if present) from the request, and encodes this information in the HTTP Digest AKA challenge as in the previously described embodiment. Alternatively, the application server 103 may also include this information to the challenge in step 4b described below. Identity information is encoded in some standard format, *e.g.* username@realm or temporary_username@remote_realm. Information needed by the application server 103 to create the HTTP Digest AKA challenge is sent back to the application server 103. If these parameters include the HTTP Digest AKA password, then process steps 6b) and 7b) below may not be needed.
4b) The UE 101 is challenged by a HTTP Digest AKA authentication challenge. The application server 103 may add the application server and end-user identities to the authentication challenge before sending the challenge to the UE 101. However, in this case, the application server 103 must be the end-point for the authentication, and possess the HTTP Digest AKA password.
5b) The UE 101 authenticates the network (as defined in standard AKA protocol) and generates a new password based on the HTTP Digest AKA challenge. The UE stores locally the identity of the application server 103 (e.g. the "realm"), the newly generated password, and the new temporary 'username' for itself (if present) to be used later by the application server 103 for mutual authentication with the application server - if present. The UE 101 sends the authentication response to the application server 103. As in the previously described embodiment, the UE 101 marks the potential new 'username' as temporary username.
6b) If the application server 103 did not receive the end-user password in step 3b above, it now requests the authenticator 105 to perform the authentication.
7b) If the application server 103 did not receive the end-user password in step 3b above and it requested authentication in step 6b, the authenticator 105 authenticates the UE 101, and returns the appropriate result to the application server 103. The authenticator 105 may also send the end-user password to the application server 103 at this or some later stage.
8b) If the UE authentication was successful, the service is delivered to the UE 101.

Following either of the procedures described above with reference to Figure 2A or Figure 2B results in the application server 103 and UE 101 having a shared secret. The next time that the application server 103 needs to authenticate the UE 101 (which may be directly after the previous procedures, or after some longer period of time, *e.g.* the next time the UE 101 contacts the application server 103), the procedure is as shown in Figure 3.
1c) The UE 101 sends a HTTP request (typically HTTP GET) to an application server 103.
2c) Since the application server 103 and the UE 101 have now a shared secret, the application server 103 challenges the UE 101 with a HTTP Digest challenge. The challenge includes the identity of the application server 103 in the "realm" parameter.
3c) The UE 101 sends an authentication response (typically in HTTP GET request) back to the application server 103 using the new temporary 'username' and password for the application server 103 created during the previous phase (described above with reference to Figure 2B or 2C). If the new temporary username was not created, then the normal AKA specific username is used. The UE 101 uses the "realm" parameter to identify the correct password.
4c) If the application server 103 possesses the end-user password, this step and the following step (5c) are not needed. If the application server 103 does not possess the end-user password, then the application server 103 requests from the authenticator 105 (or some other network entity (not shown) where the authenticator 105 has stored the UE specific password), for authentication.
5c) There are two different possibilities at this stage. The authenticator 105 may take care of the authentication on behalf of the application server 103. In this case, the application server 103 does not need to know the password, and the authenticator simply returns information to the application server 103 as to whether or not authentication was successful. Alternatively, the authenticator 105 may send the password to the application server 103, which then performs the authentication.

If the authentication was successful, the AS delivers the service to the UE.

It will be appreciated that variations from the above described embodiments may still fall within the scope of the invention. For example, as noted in RFC 2617, the authenticator does not actually need to know the user's cleartext password. As long as the digested value of the username, realm and password is available to the server, the validity of an authorisation header may be verified.

## Claims

1. A method of generating a password for use by an end-user device, UE, to access a remote server, comprising:
sending a request for access from the UE to the remote server;
creating a temporary identity for the UE;
sending to an authentication node in the UE's home network details of the request for access;
at the authentication node or the remote server, generating a Hypertext Transfer Protocol, HTTP, Digest challenge using an algorithm capable of generating end-user passwords, including details of the temporary identity of the UE;
at the UE, generating a password based on the HTTP Digest challenge, said password being associated with the identity of the remote server and the identity of the UE; and
storing the password and the temporary identity of the UE at the UE.

2. A method as claimed in claim 1, wherein the algorithm capable of generating end-user passwords is HTTP Digest Authentication and Key Agreement, AKA.

3. A method as claimed in claim 1 or 2, further comprising sending the identity of the remote server to the authentication node, wherein the step of generating the HTTP Digest challenge includes using the identity of the remote server, and wherein the identity of the remote server is stored at the UE.

4. A method as claimed in claim 1, 2 or 3, wherein the temporary identity of the UE is created at the remote server.

5. A method as claimed in any preceding claim, wherein the step of sending details of the request for access to the authentication node includes redirecting the request for access to the authentication node.

6. A method as claimed in claim 5, wherein the HTTP Digest challenge is generated at the authentication node and sent from the authentication node directly to the UE.

7. A method as claimed in claim 5 or 6, wherein the password is stored at the authentication node.

8. A method as claimed in claim 5, 6 or 7, further comprising authenticating the UE at the authentication node and redirecting the request for access from the authentication node back to the remote server after the password has been generated.

9. A method as claimed in any of claims 1 to 4, wherein the step of sending details of the request for access to the authentication node includes the remote server contacting the authentication node directly.

10. A method as claimed in claim 9, wherein the HTTP Digest challenge is generated at the authentication node and sent from the authentication node to the remote server.

11. A method as claimed in claim 9, wherein the HTTP Digest challenge is generated at the remote server.

12. A method as claimed in claim 10 or 11, further comprising sending the HTTP digest challenge from the remote server to the UE.

13. A method as claimed in claim 11, further comprising including a HTTP Digest AKA challenge password in the information sent from the authentication node to the remote server and authenticating the UE at the remote server.

14. A method as claimed in any of claims 9 to 12, further comprising authenticating the UE at the authentication node and returning an authentication result to the remote server.

15. A method of accessing a remote server from an end-user device, UE, the method comprising:
generating and storing a password using a method as claimed in any of the preceding claims;
sending a request for access from the UE to the remote server;
at the remote server, generating a Hypertext Transfer Protocol, HTTP, Digest challenge including details of the identity of the remote server and sending the challenge to the UE; and
at the UE, sending an authentication response including the temporary identity of the UE and a proof of possession of the password to the remote server.

16. A method as claimed in claim 15, further comprising sending an authentication request from the remote server to the authentication node, sending the password from the authentication node to the remote server, and authenticating the UE at the remote server.

17. A method as claimed in claim 15, further comprising sending an authentication request from the remote server to the authentication node, authenticating the UE at the authentication node, and sending confirmation of authentication from the authentication node to the remote server.

## Patentansprüche

1. Ein Verfahren zum Erzeugen eines Passworts zur Verwendung durch ein Endbenutzergerät, UE, zum Zugreifen auf einen entfernten Server, umfassend:
Senden einer Anforderung für einen Zugriff von dem UE auf den entfernten Server;
Erzeugen einer temporären Identität für das UE;
Senden an einen Authentifizierungsknoten in dem Heimnetzwerk des UE Details von der Anforderung für einen Zugriff;
bei dem Authentifizierungsknoten oder dem entfernten Server, Erzeugen einer Hypertext-Transferprotokoll-HTTP-Aufforderung, unter Verwendung eines Algorithmus, der in der Lage ist, Endbenutzerpasswörter zu generieren, einschließlich von Details über die temporäre Identität des UE;
bei dem UE, Erzeugen eines Passworts, basierend auf der HTTP-Aufforderung, wobei das Passwort im Zusammenhang steht mit der Identität des entfernten Servers und der Identität des UE; und
Speichern des Passworts und der temporären Identität des UE bei dem UE.

2. Ein Verfahren, wie in Anspruch 1 beansprucht, wobei der Algorithmus, der in der Lage ist zum Erzeugen von Endbenutzerpasswörtern, eine HTTP-Digest-Authentifizerung und Key-Agreement, AKA, ist.

3. Ein Verfahren, wie in Anspruch 1 oder 2 beansprucht, ferner umfassend Senden der Identität des entfernten Servers an den Authentifizierungsknoten, wobei der Schritt eines Erzeugens der HTTP-Digest-Aufforderung enthält, ein Verwenden der Identität des entfernten Servers, und wobei die Identität des entfernten Servers gespeichert wird bei dem UE.

4. Ein Verfahren, wie in Anspruch 1, 2 oder 3 beansprucht, wobei die temporäre Identität des UE erzeugt wird bei dem entfernten Server.

5. Ein Verfahren, wie in einem der vorhergehenden Ansprüche beansprucht, wobei der Schritt eines Sendens von Details über die Anforderung zum Zugriff auf den Authentifizierungsknoten Umleiten der Anforderung zum Zugreifen auf den Authentifizierungsknoten enthält.

6. Ein Verfahren, wie in Anspruch 5 beansprucht, wobei die HTTP-Digest-Aufforderung erzeugt wird bei dem Authentifizierungsknoten und gesendet wird von dem Authentifizierungsknoten direkt an das UE.

7. Ein Verfahren, wie in Anspruch 5 oder 6 beansprucht, wobei das Passwort gespeichert wird bei dem Authentifizierungsknoten.

8. Ein Verfahren, wie in Anspruch 5, 6 oder 7 beansprucht, ferner umfassend Authentifizieren des UE bei dem Authentifizierungsknoten, und Umleiten der Anforderung zum Zugriff von dem Authentifizierungsknoten zurück zu dem entfernten Server, nachdem das Passwort erzeugt wurde.

9. Ein Verfahren, wie in einem der Anspruche 1 bis 4 beansprucht, wobei der Schritt eines Sendens von Details über die Anforderung zum Zugreifen auf den Authentifizierungsknoten enthält, dass der entfernte Server den Authentifizierungsknoten direkt kontaktiert.

10. Ein Verfahren, wie in Anspruch 9 beansprucht, wobei die HTTP-Digest-Aufforderung erzeugt wird bei dem Authentifizierungsknoten und gesendet wird von dem Authentifizierungsknoten an den entfernten Server.

11. Ein Verfahren, wie in Anspruch 9 beansprucht, wobei die HTTP-Digest-Aufforderung erzeugt wird bei dem entfernten Server.

12. Ein Verfahren, wie in Anspruch 10 oder 11 beansprucht, ferner umfassend ein Senden der HTTP-Digest-Aufforderung von dem entfernten Server an das UE.

13. Ein Verfahren, wie in Anspruch 11 beansprucht, ferner umfassend, dass ein HTTP-Digest-AKA-Aufforderungspasswort in der Information enthalten ist, die gesendet wird von dem Authentifizierungsknoten an den entfernten Server und Authentifizieren des UE bei dem entfernten Server.

14. Ein Verfahren, wie in einem der Ansprüche 9 bis 12 beansprucht, ferner umfassend Authentifizieren des UE bei dem Authentifizierungsknoten und Zurückgeben eines Authentifizierungsergebnisses an den entfernten Server.

15. Ein Verfahren zum Zugreifen eines entfernten Servers von einem Endbenutzergerät, UE, wobei das Verfahren umfasst:
Erzeugen und Speichern eines Passworts unter Verwendung eines Verfahrens, wie in einem der vorhergehenden Ansprüche beansprucht;
Senden einer Anforderung zum Zugriff von dem UE an den entfernten Server;
bei dem entfernten Server, Erzeugen einer Hypertext-Transfer-Protokoll, HTTP, Digest-Aufforderung, die Details über die Identität des entfernten Servers enthält, und Senden der Aufforderung an das UE; und
bei dem UE, Senden einer Authentifizierungsantwort, die die temporäre Identität des UE enthält, sowie einen Nachweis über einen Besitz des Passworts, an den entfernten Server.

16. Ein Verfahren, wie in Anspruch 15 beansprucht, ferner umfassend Senden einer Authentifizierungsanforderung von dem entfernten Server an den Authentifizierungsknoten, Senden des Passworts von dem Authentifizierungsknoten an den entfernten Server, und Authentifizieren des UE bei dem entfernten Server.

17. Ein Verfahren, wie in Anspruch 15 beansprucht, ferner umfassend Senden einer Authentifizierungsanforderung von dem entfernten Server an den Authentifizierungsknoten, Authentifizieren des UE bei dem Authentifizierungsknoten, und Senden einer Bestätigung der Authentifizierung von dem Authentifizierungsknoten an den entfernten Server.

## Revendications

1. Procédé de production d'un mot de passe à utiliser par un dispositif utilisateur pour accéder à un serveur distant, comprenant les étapes consistant à :
envoyer par le dispositif utilisateur une demande d'accès au serveur distant ;
créer une identité temporaire pour le dispositif utilisateur ;
envoyer les détails de la demande d'accès à un noeud d'identification sur le réseau de rattachement du dispositif utilisateur ;
sur le noeud d'authentification ou sur le serveur distant, produire une question d'authentification HTTP, pour « *Hyper Text Transfer Protocol* » *-* Protocole de transfert d'hypertexte, mode Digest, en utilisant un algorithme en mesure de produire des mots de passe d'utilisateurs, en incluant les détails de l'identité temporaire du dispositif utilisateur ;
sur le dispositif utilisateur, produire un mot de passe fondé sur la question d'authentification HTTP Digest, ledit mot de passe étant associé à l'identité du serveur distant et à l'identité du dispositif utilisateur ; et
stocker sur le dispositif utilisateur le mot de passe et l'identité temporaire du dispositif utilisateur.

2. Procédé selon la revendication 1, dans lequel l'algorithme en mesure de produire des mots de passe d'utilisateurs est le protocole HTTP Digest AKA, pour « *Authentification and Key Agreement* » - Authentification et concordance de clefs.

3. Procédé selon la revendication 1 ou 2, comprenant en outre l'étape consistant à envoyer l'identité du serveur distant au noeud d'authentification, dans lequel l'étape de production de la question d'authentification HTTP Digest comprend l'utilisation de l'identité du serveur distant et dans lequel l'identité du serveur distant est stockée sur le dispositif utilisateur.

4. Procédé selon la revendication 1, 2 ou 3, dans lequel l'identité temporaire du dispositif utilisateur est créée sur le serveur distant.

5. Procédé selon l'une quelconque des revendications précédentes, dans lequel l'étape d'envoi au noeud d'authentification des détails de la demande d'accès comprend la redirection de la demande d'accès vers le noeud d'authentification.

6. Procédé selon la revendication 5, dans lequel la question d'authentification HTTP Digest est produite sur le noeud d'authentification et est envoyée directement au dispositif utilisateur à partir du noeud d'authentification.

7. Procédé selon la revendication 5 ou 6, dans lequel le mot de passe est stocké sur le noeud d'authentification.

8. Procédé selon la revendication 5, 6 ou 7, comprenant en outre les étapes consistant à authentifier le dispositif utilisateur sur le noeud d'authentification et à rediriger la demande d'accès à partir du noeud d'authentification vers le serveur distant après que le mot de passe a été produit.

9. Procédé selon l'une quelconque des revendications 1 à 4, dans lequel l'étape d'envoi des détails de la demande d'accès au noeud d'authentification comprend une prise de contact directe du serveur distant avec le noeud d'authentification.

10. Procédé selon la revendication 9, dans lequel la question d'authentification HTTP Digest est produite sur le noeud d'authentification et est envoyée au serveur distant par le noeud d'authentification.

11. Procédé selon la revendication 9, dans lequel la question d'authentification HTTP Digest est produite sur le serveur distant.

12. Procédé selon la revendication 10 ou 11, comprenant en outre l'étape d'envoi de la question d'authentification HTTP Digest par le serveur distant vers le dispositif utilisateur.

13. Procédé selon la revendication 11, comprenant en outre les étapes consistant à inclure un mot de passe de question d'authentification HTTP Digest dans les informations envoyées par le noeud d'authentification au serveur distant et à authentifier le dispositif utilisateur sur le serveur distant.

14. Procédé selon l'une quelconque des revendications 9 à 12, comprenant en outre les étapes consistant à authentifier le dispositif utilisateur sur le noeud d'authentification et à retourner un résultat d'authentification au serveur distant.

15. Procédé d'accès à un serveur distant par un dispositif utilisateur, le procédé comprenant les étapes consistant à :
produire et stocker un mot de passe à l'aide d'un procédé selon l'une quelconque des revendications précédentes ;
envoyer par le dispositif utilisateur une demande d'accès au serveur distant ;
sur le serveur distant, produire une question d'authentification HTTP Digest, en utilisant des détails de l'identité du serveur distant et envoyer la question d'authentification au dispositif utilisateur ; et
sur le dispositif utilisateur, envoyer au serveur distant une réponse d'authentification comprenant l'identité temporaire du dispositif utilisateur et une preuve de la possession du mot de passe.

16. Procédé selon la revendication 15, comprenant en outre les étapes consistant à envoyer par le serveur distant une demande d'authentification au noeud d'authentification, envoyer le mot de passe du noeud d'authentification au serveur distant et authentifier le dispositif utilisateur sur le serveur distant.

17. Procédé selon la revendication 15, comprenant en outre les étapes consistant à envoyer par le serveur distant une demande d'authentification au noeud d'authentification, authentifier le dispositif utilisateur sur le noeud d'authentification et envoyer par le noeud d'authentification au serveur distant une confirmation d'authentification.
